# EUROPEAN PATENT APPLICATION

(11) **EP 4 039 499 A1**
(43) Date of publication of application: **10.08.2022**
(21) Application number: 20870769.5
(22) Date of filing: 21.08.2020
(51) Int. Cl.: B60C 1/00, C08K 5/09, C08L 7/00, C08L 9/00, C08L 9/02, C08L 9/06, C08L 21/00, C08K 3/22

(54) **RUBBER COMPOSITION, COMPOSITE MATERIAL, HOSE, CONVEYOR BELT, CRAWLER, AND TIRE**

(30) Priority: 30.09.2019 JP 2019180723
(71) Applicant: BRIDGESTONE CORPORATION, Chuo-ku Tokyo 104-8340 (JP)
(72) Inventor: HIGA, Tomoki, Tokyo 104-8340 (JP)
(74) Representative: Oxley, Robin John George
(86) International application number: PCT/JP2020/031737
(87) International publication number: WO 2021/065246

(57) **Abstract**

Provided is a rubber composition comprising at least NBR as a rubber component and having rubber-metal adhesiveness equal to or higher than that of a rubber composition comprising a cobalt salt. The rubber composition comprises a rubber component, and a rubber-metal adhesion promoter, where the rubber component comprises at least 10 parts by mass of NBR per 100 parts by mass of the rubber component, the rubber-metal adhesion promoter comprises at least one selected from the group consisting of a metal salt of an aliphatic carboxylic acid (1) and a compound (2) having a specific structure.

## Description

### CROSS REFERENCE TO RELATED APPLICATION

This application claims priority to Japanese Patent Application No. 2019-180723 filed on September 30, 2019, the entire disclosure of which is incorporated herein by reference.

### TECHNICAL FIELD

This disclosure relates to a rubber composition, a composite, a hose, a conveyor belt, a crawler, and a tire.

### BACKGROUND

Adding an adhesion promoter to a rubber composition forming a rubber material is a common method for improving the adhesiveness between the rubber material and a metal member such as a steel cord (hereinafter, simply referred to as "rubber-metal"). Cobalt-based compounds such as cobalt stearate or cobalt versatate have been frequently used as such an adhesion promoter, because they have a good effect of promoting rubber-metal adhesiveness. However, in light of recent trends in environmental regulations, there is a demand for alternatives of non-cobalt-based adhesion promoters, and the development is urgently needed.

### CITATION LIST

### Patent Literature

PTL 1: WO2016/039375

### SUMMARY

### (Technical Problem)

Therefore, there is a demand for a rubber composition having rubber-metal adhesiveness equal to that of a rubber composition comprising a cobalt salt, even if no cobalt salt is contained.

For example, WO2016/039375 (PTL1) proposes a specific adhesion promoter which is capable of, even without cobalt, exerting a rubber-metal adhesive force higher than that of an adhesion promoter containing cobalt, and a rubber composition and a tire using the same, for providing such an adhesion promoter, and a rubber composition and a tire using the same.

PTL 1 lists acrylonitrile butadiene rubber (NBR) as an example of a rubber component. However, it only used natural rubber (NR) in Examples, and there is no specific study on a rubber composition having rubber-metal adhesiveness equal to or higher than that of a rubber composition comprising a cobalt salt in terms of a rubber composition comprising NBR.

NBR is used, for example, as a rubber component of rubber articles such as hoses. For example, a rubber composition in contact with a metal member such as a metal wire, a rubber composition forming a composite with a metal member, and the like are included in a part of a rubber article such as a hose.

It could thus be helpful to provide a rubber composition comprising at least acrylonitrile butadiene rubber (NBR) as a rubber component and having rubber-metal adhesiveness equal to or higher than that of a rubber composition comprising a cobalt salt.

It is also helpful to provide a composite of the above rubber composition and a metal member.

It is also helpful to provide a hose using the above composite.

It is also helpful to provide a conveyor belt using the above composite.

It is also helpful to provide a crawler using the above composite.

It is also helpful to provide a tire using the above composite.

### (Solution to Problem)

The rubber composition comprises
a rubber component, and
a rubber-metal adhesion promoter, wherein
the rubber component comprises at least 10 parts by mass of acrylonitrile butadiene rubber per 100 parts by mass of the rubber component,
the rubber-metal adhesion promoter comprises at least one selected from the group consisting of a metal salt of an aliphatic carboxylic acid (1) and a compound (2) represented by a general formula (A): [(RCOO)ₓMO]₃Z,
the aliphatic carboxylic acid of the metal salt of an aliphatic carboxylic acid (1) has 2 to 25 carbon atoms,
the metal of the metal salt of an aliphatic carboxylic acid (1) is bismuth, zinc, copper, antimony, silver, niobium or zirconium, and
in the general formula (A), (RCOO) is a residue of an aliphatic carboxylic acid having 2 to 25 carbon atoms, M is bismuth, zinc, copper, antimony, silver, niobium or zirconium, x is an integer of 1 or more and (valence of M - 1), and Z is a structure selected from the following formulae (z-1) to (z-4).

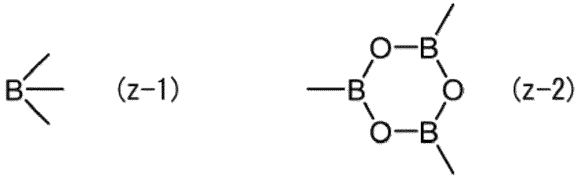

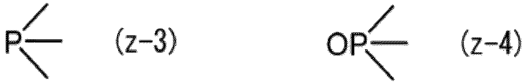

In this way, the rubber composition of the present disclosure obtains rubber-metal adhesiveness equal to or higher than that of a rubber composition comprising a cobalt salt.

The composite of the present disclosure is a composite of any of the above rubber compositions and a metal member. In this way, it obtains rubber-metal adhesiveness equal to or higher than that of a rubber composition comprising a cobalt salt.

The hose of the present disclosure is a hose using the above composite. In this way, it obtains rubber-metal adhesiveness equal to or higher than that of a rubber composition comprising a cobalt salt.

The conveyor belt of the present disclosure is a conveyor belt using the above composite. In this way, it obtains rubber-metal adhesiveness equal to or higher than that of a rubber composition comprising a cobalt salt.

The crawler of the present disclosure is a crawler using the above composite. In this way, it obtains rubber-metal adhesiveness equal to or higher than that of a rubber composition comprising a cobalt salt.

The tire of the present disclosure is a tire using the above composite. In this way, it obtains rubber-metal adhesiveness equal to or higher than that of a rubber composition comprising a cobalt salt.

### (Advantageous Effect)

According to the present disclosure, it is possible to provide a rubber composition comprising at least acrylonitrile butadiene rubber (NBR) as a rubber component and having rubber-metal adhesiveness equal to or higher than that of a rubber composition comprising a cobalt salt. Further, according to the present disclosure, it is possible to provide a composite, a hose, a conveyor belt, a crawler, and a tire having rubber-metal adhesiveness equal to or higher than that of a rubber composition comprising a cobalt salt.

### DETAILED DESCRIPTION

The following describes embodiments of the present disclosure. It should be noted that the descriptions given below are illustrative purposes only and shall not be construed as limiting the scope of the present disclosure.

Two or more embodiments may be arbitrarily combined in the present disclosure.

In the present specification, a numerical range includes the lower limit value and the upper limit value of the range unless otherwise specified. For example, 1,000 to 50,000 means 1,000 or more and 50,000 or less.

### (Rubber composition)

The rubber composition of the present disclosure comprises
a rubber component, and
a rubber-metal adhesion promoter, where
the rubber component comprises at least 10 parts by mass of acrylonitrile butadiene rubber per 100 parts by mass of the rubber component,
the rubber-metal adhesion promoter comprises at least one selected from the group consisting of a metal salt of an aliphatic carboxylic acid (1) and a compound (2) represented by a general formula (A): [(RCOO)ₓMO]₃Z,
the aliphatic carboxylic acid of the metal salt of an aliphatic carboxylic acid (1) has 2 to 25 carbon atoms,
the metal of the metal salt of an aliphatic carboxylic acid (1) is bismuth, zinc, copper, antimony, silver, niobium or zirconium, and
in the general formula (A), (RCOO) is a residue of an aliphatic carboxylic acid having 2 to 25 carbon atoms, M is bismuth, zinc, copper, antimony, silver, niobium or zirconium, x is an integer of 1 or more and (valence of M - 1), and Z is a structure selected from the following formulae (z-1) to (z-4).

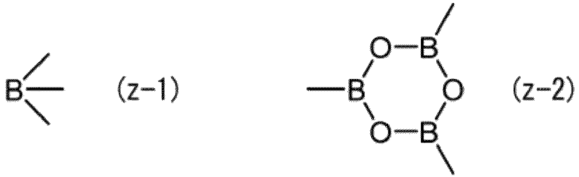

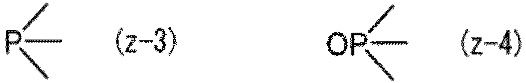

The following describes the rubber component and the rubber-metal adhesion promoter, which are essential components of the rubber composition of the present disclosure, and optional components of the rubber composition of the present disclosure.

### <Rubber component>

The rubber composition of the present disclosure comprises at least 10 parts by mass of acrylonitrile butadiene rubber (NBR) per 100 parts by mass of the rubber component.

The NBR may be a known NBR that is appropriately selected. Examples of the NBR include high nitrile NBR with 36 % or more of bound acrylonitrile (hereinafter, simply referred to as "AN"), medium and high nitrile NBR with 30 % or more and less than 36 % of AN, medium nitrile NBR with 25 % or more and less than 30 % of AN, and low nitrile NBR with less than 25 % of AN.

The NBRs may be used alone or in combination of two or more.

In one embodiment of the rubber composition for hose, the content of AN is 3 % or more, 5 % or more, 10 % or more, 15 % or more, 20 % or more, 25 % or more, 30 % or more, 31 % or more, 35 % or more, or 40 % or more with respect to the total amount of the rubber component by at least one type of NBR. In another embodiment of the rubber composition for hose, the content of AN is 45 % or less, 40 % or less, 35 % or less, 31 % or less, 30 % or less, 25 % or less, 20 % or less, 15 % or less, 10 % or less or 5 % or less with respect to the total amount of the rubber component by at least one type of NBR. In yet another embodiment of the rubber composition for hose, the content of AN is 3 % to 45 % with respect to the total amount of the rubber component. From the viewpoint of oil resistance, the content of AN in the rubber composition for hose is preferably 10 % to 45 % with respect to the total amount of the rubber component by at least one type of NBR.

The content of the NBR is at least 10 parts by mass per 100 parts by mass of the rubber component. When it is less than 10 parts by mass, rubber-metal adhesiveness equal to or higher than that of a rubber composition comprising a cobalt salt cannot be obtained. In one embodiment, the content of the NBR is 10 parts by mass or more, 20 parts by mass or more, 30 parts by mass or more, 40 parts by mass or more, 50 parts by mass or more, 60 parts by mass or more, 70 parts by mass, 80 parts by mass or more, or 90 parts by mass or more per 100 parts by mass of the rubber component. In another embodiment, the content of the NBR is 100 parts by mass or less, 95 parts by mass or less, 90 parts by mass or less, 80 parts by mass or less, 70 parts by mass or less, 60 parts by mass or less, 50 parts by mass, 40 parts by mass or less, 30 parts by mass or less, or 20 parts by mass or less per 100 parts by mass of the rubber component.

In the rubber composition of the present disclosure, the rubber component preferably comprises 90 parts by mass or less of acrylonitrile butadiene rubber per 100 parts by mass of the rubber component. This provides the rubber composition with excellent durability as well as rubber-metal adhesiveness equal to or higher than that of a rubber composition comprising a cobalt salt.

As the rubber component, the NBR may be used alone, or the NBR may be used in combination with other rubbers.

Examples of rubber components other than the NBR include natural rubber (NR), synthetic isoprene rubber (IR), butadiene rubber (BR), styrene butadiene rubber (SBR), chloroprene rubber (CR), ethylene-propylene-diene rubber (EPDM), and butyl rubber (IIR). These rubber components other than the NBR may be used alone or in combination of two or more.

In one embodiment, the rubber component other than the NBR is at least one selected from the group consisting of NR, SBR and BR. In another embodiment, the content of CR is less than 10 parts by mass per 100 parts by mass of the rubber component. In yet another embodiment, the rubber component other than the NBR does not comprise CR.

In the rubber composition of the present disclosure, the rubber component is preferably a combination of acrylonitrile butadiene rubber and at least one selected from the group consisting of natural rubber, styrenebutadiene rubber and butadiene rubber. This provides better rubber-metal adhesiveness.

### <Rubber-metal adhesion promoter>

The rubber composition of the present disclosure comprises a rubber-metal adhesion promoter. The rubber-metal adhesion promoter comprises at least one selected from the group consisting of a metal salt of an aliphatic carboxylic acid (1) and a compound (2) represented by a general formula (A): [(RCOO)ₓMO]₃Z, the aliphatic carboxylic acid of the metal salt of an aliphatic carboxylic acid (1) has 2 to 25 carbon atoms, the metal of the metal salt of an aliphatic carboxylic acid (1) is bismuth, zinc, copper, antimony, silver, niobium or zirconium, and in the general formula (A), (RCOO) is a residue of an aliphatic carboxylic acid having 2 to 25 carbon atoms, M is bismuth, zinc, copper, antimony, silver, niobium or zirconium, x is an integer of 1 or more and (valence of M - 1), and Z is a structure selected from the following formulae (z-1) to (z-4).

### - Metal salt of aliphatic carboxylic acid (1)

The metal salt of an aliphatic carboxylic acid (1) (hereinafter, it may be simply referred to as "metal salt (1)") is a metal salt formed by a chemical reaction between an aliphatic carboxylic acid having 2 to 25 carbon atoms and a metal. The metal salt (1) acts as a rubber-metal adhesion promoter in the rubber composition of the present disclosure. As is obvious to those skilled in the art, the metal salt (1) is a metal salt formed from an aliphatic carboxylic acid anion and a metal cation. In the present specification, however, the aliphatic carboxylic acid anion and the metal cation forming the metal salt (1) are simply referred to as the aliphatic carboxylic acid and the metal, respectively, for convenience of explanation,

The metal of the metal salt (1) is bismuth, zinc, copper, antimony, silver, niobium or zirconium. Among the metals of the metal salt (1), bismuth, zinc, copper, antimony or silver are preferable, and bismuth, zinc or copper are more preferable, because of the good adhesiveness between a metal material such as a steel cord and a rubber composition even under moist and heat conditions.

In the rubber composition of the present disclosure, the rubber-metal adhesion promoter comprises the metal salt of an aliphatic carboxylic acid (1), and the metal of the metal salt of an aliphatic carboxylic acid (1) is preferably bismuth or zinc. This provides better rubber-metal adhesiveness.

The aliphatic carboxylic acid of the metal salt (1) is an aliphatic carboxylic acid having 2 to 25 carbon atoms. From the viewpoints of the compatibility between the metal salt (1) and the rubber component and the adhesiveness between the rubber composition and a metal material, the aliphatic carboxylic acid has 2 or more carbon atoms. Further, from the viewpoints of ease of synthesis of the metal salt (1) and the adhesiveness between the rubber composition and a metal material, the aliphatic carboxylic acid has 25 or less carbon atoms. In the present disclosure, the number of carbon atoms of the aliphatic carboxylic acid means the number of carbon atoms including carbon atoms of the carboxyl group of the aliphatic carboxylic acid.

In one embodiment, the aliphatic carboxylic acid of the metal salt (1) has 2 or more, 3 or more, 4 or more, 5 or more, 6 or more, 7 or more, 8 or more, 9 or more, 10 or more, 11 or more, 12 or more, 13 or more, 14 or more, 15 or more, 16 or more, 17 or more, 18 or more, 19 or more, 20 or more, 21 or more, 22 or more, 23 or more, or 24 or more carbon atoms. In another embodiment, the aliphatic carboxylic acid of the metal salt (1) has 25 or less, 24 or less, 23 or less, 22 or less, 21 or less, 20 or less, 19 or less, 18 or less, 17 or less, 16 or less, 15 or less, 14 or less, 13 or less, 12 or less, 11 or less, 10 or less, 9 or less, 8 or less, 7 or less, 6 or less, 5 or less, 4 or less, or 3 or less carbon atoms. In yet another embodiment, the aliphatic carboxylic acid of the metal salt (1) has 8 to 18 carbon atoms.

The aliphatic carboxylic acid having 2 to 25 carbon atoms is not particularly limited, and examples thereof include an aliphatic monocarboxylic acid and an aliphatic dicarboxylic acid.

In the rubber composition of the present disclosure, the rubber-metal adhesion promoter comprises the metal salt of an aliphatic carboxylic acid (1), and the aliphatic carboxylic acid of the aliphatic carboxylic acid is preferably an aliphatic monocarboxylic acid or an aliphatic dicarboxylic acid. This provides better rubber-metal adhesiveness.

In the rubber composition of the present disclosure, the aliphatic carboxylic acid of the aliphatic carboxylic acid is preferably a saturated aliphatic monocarboxylic acid having 2 to 20 carbon atoms. This provides better rubber-metal adhesiveness.

Examples of the aliphatic monocarboxylic acid having 2 to 25 carbon atoms include saturated or unsaturated aliphatic monocarboxylic acids.

Examples of the saturated aliphatic monocarboxylic acid include ethanoic acid, propanoic acid, butanoic acid, pentanoic acid, hexanoic acid, 2-ethylhexanoic acid, heptanoic acid, octanoic acid, nonanoic acid, isononanoic acid, decanoic acid, neodecanoic acid, dodecanoic acid, tetradecanoic acid, hexadecanoic acid, heptadecanoic acid, octadecanoic acid, eicosanoic acid, docosanoic acid, tetracosanoic acid, and naphthenic acid.

Examples of the unsaturated aliphatic monocarboxylic acid include 9-hexadecenoic acid, cis-9-octadecenoic acid, 11-octadecenoic acid, cis, cis-9,12-octadecadienoic acid, 9,12,15-octadecatrienoic acid, 6,9,12-octadecatrienoic acid, 9,11,13-octadecatrienoic acid, eicosanoic acid, 8,11-eicosadienoic acid, 5,8,11-eicosatrienoic acid, 5,8,11,14-eicosatetraenoic acid, tung oil acid, flaxseed oil acid, soybean oil acid, resin acid, tall oil fatty acid, rosin acid, abietic acid, neoabietic acid, palustric acid, pimaric acid, and dehydroabietic acid.

Examples of the aliphatic dicarboxylic acid having 2 to 25 carbon atoms include saturated or unsaturated aliphatic dicarboxylic acids.

Examples of the saturated aliphatic dicarboxylic acid include oxalic acid, malonic acid, succinic acid, glutaric acid, and adipic acid.

Examples of the unsaturated aliphatic dicarboxylic acid include fumaric acid and maleic acid.

In one embodiment, the aliphatic carboxylic acid is at least one selected from the group consisting of saturated or unsaturated aliphatic monocarboxylic acids and saturated or unsaturated aliphatic dicarboxylic acids. In another embodiment, the aliphatic carboxylic acid is at least one selected from the group consisting of saturated or unsaturated aliphatic monocarboxylic acids. In yet another embodiment, the aliphatic carboxylic acid is at least one selected from the group consisting of saturated aliphatic monocarboxylic acids. In another embodiment, the aliphatic carboxylic acid is at least one selected from the group consisting of saturated aliphatic monocarboxylic acids having 2 to 20 carbon atoms. In yet another embodiment, it is at least one selected from the group consisting of saturated aliphatic monocarboxylic acids having 8 to 18 carbon atoms. In another embodiment, the aliphatic carboxylic acid is at least one selected from the group consisting of 2-ethylhexanoic acid, neodecanoic acid, hexadecanoic acid, and octadecanoic acid.

In the rubber composition of the present disclosure, the saturated aliphatic monocarboxylic acid is preferably 2-ethylhexanoic acid, neodecanoic acid, hexadecanoic acid, or octadecanoic acid. This provides better rubber-metal adhesiveness.

In one embodiment, the metal salt (1) is at least one selected from the group consisting of bismuth 2-ethylhexanoate, zinc 2-ethylhexanoate, copper 2-ethylhexanoate, antimony 2-ethylhexanoate, silver 2-ethylhexanoate, niobium 2-ethylhexanoate, zirconium 2-ethylhexanoate, bismuth neodecanoate, zinc neodecanoate, copper neodecanoate, antimony neodecanoate, silver neodecanoate, niobium neodecanoate, zirconium neodecanoate, bismuth hexadecanoate, zinc hexadecanoate, copper hexadecanoate, antimony hexadecanoate, silver hexadecanoate, niobium hexadecanoate, zirconium hexadecanoate, bismuth octadecanoate, zinc octadecanoate, copper octadecanoate, antimony octadecanoate, silver octadecanoate, niobium octadecanoate, and zirconium octadecanoate. In another embodiment, the metal salt (1) is at least one selected from the group consisting of bismuth 2-ethylhexanoate, zinc 2-ethylhexanoate, bismuth neodecanoate, zinc neodecanoate, bismuth hexadecanoate, zinc hexadecanoate, bismuth octadecanoate, and zinc octadecanoate. In yet another embodiment, the metal salt (1) is at least one selected from the group consisting of bismuth 2-ethylhexanoate, zinc 2-ethylhexanoate, copper 2-ethylhexanoate, antimony 2-ethylhexanoate, silver 2-ethylhexanoate, niobium 2-ethylhexanoate, bismuth neodecanoate, zinc neodecanoate, copper neodecanoate, antimony neodecanoate, silver neodecanoate, niobium neodecanoate, bismuth hexadecanoate, zinc hexadecanoate, bismuth octadecanoate, and zinc octadecanoate

The metal salt (1) may be used alone or in combination of two or more.

The method for preparing the metal salt (1) is not particularly limited, and a known method may be appropriately selected and used. For example, the manufacturing method 1 or the manufacturing method 2 described in PTL 1 or the like may be used.

### - Compound (2)

The compound (2) has a structure represented by the general formula (A): [(RCOO)ₓMO]₃Z. The compound (2) acts as a rubber-metal adhesion promoter in the rubber composition of the present disclosure.

The (RCOO) in the general formula (A) is a residue of an aliphatic carboxylic acid having 2 to 25 carbon atoms. From the viewpoints of the compatibility between the compound (2) and the rubber component and the adhesiveness between the rubber composition and a metal material, the aliphatic carboxylic acid has 2 or more carbon atoms. Further, from the viewpoints of ease of synthesis of the compound (2) and the adhesiveness between the rubber composition and a metal material, the aliphatic carboxylic acid has 25 or less carbon atoms. In the present disclosure, the number of carbon atoms of the aliphatic carboxylic acid means the number of carbon atoms including carbon atoms of the carboxyl group of the aliphatic carboxylic acid.

The aliphatic carboxylic acid having 2 to 25 carbon atoms forming the residue (RCOO) which is an anion is the same as the aliphatic carboxylic acid of the metal salt (1) described above. Each embodiment described for the aliphatic carboxylic acid of the metal salt (1) can also be applied to the aliphatic carboxylic acid having 2 to 25 carbon atoms forming the residue (RCOO).

In the rubber composition of the present disclosure, the rubber-metal adhesion promoter comprises the compound (2), and in the general formula (A), the (RCOO) is preferably a residue of a saturated aliphatic monocarboxylic acid having 2 to 20 carbon atoms. This provides better rubber-metal adhesiveness.

In the rubber composition of the present disclosure, the saturated aliphatic monocarboxylic acid is preferably 2-ethylhexanoic acid, neodecanoic acid, hexadecanoic acid or octadecanoic acid. This provides better rubber-metal adhesiveness.

The M in the general formula (A) is bismuth, zinc, copper, antimony, silver, niobium, or zirconium. Among the above, bismuth, zinc, copper, antimony or silver is preferable, and bismuth, zinc or copper is more preferable, because of the good adhesiveness between a metal material such as a steel cord and a rubber composition even under moist and heat conditions.

In the rubber composition of the present disclosure, the rubber-metal adhesion promoter comprises the compound (2), and the M in the general formula (A) is preferably bismuth or zinc. This provides better rubber-metal adhesiveness.

The x in the general formula (A) is an integer of 1 or more and (valence of M - 1). That is, the x is a positive integer of (valence of M - 1).

The Z in the general formula (A) is a structure selected from the following formulae (z-1) to (z-4).

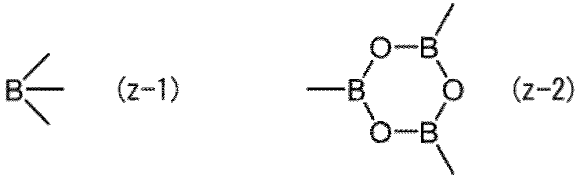

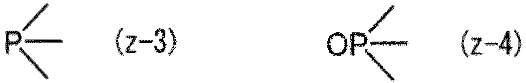

Among the above four structures, the structure represented by the formula (z-1) is preferable from the viewpoint of obtaining high adhesiveness between the rubber composition and a metal material.

In the rubber composition of the present disclosure, the rubber-metal adhesion promoter comprises the compound (2), and the Z in the general formula (A) is preferably the structure represented by the formula (z-1). This provides better rubber-metal adhesiveness.

In one embodiment, the compound (2) is at least one selected from the group consisting of bismuth boron 2-ethylhexanoate, zinc boron 2-ethylhexanoate, copper boron 2-ethylhexanoate, antimony boron 2-ethylhexanoate, silver boron 2-ethylhexanoate, niobium boron 2-ethylhexanoate, zirconium boron 2-ethylhexanoate, bismuth boron neodecanoate, zinc boron neodecanoate, copper boron neodecanoate, antimony boron neodecanoate, silver boron neodecanoate, niobium boron neodecanoate, zirconium boron neodecanoate, bismuth boron hexadecanoate, zinc boron hexadecanoate, copper boron hexadecanoate, antimony boron hexadecanoate, silver boron hexadecanoate, niobium boron hexadecanoate, zirconium boron hexadecanoate, bismuth boron octadecanoate, zinc boron octadecanoate, copper boron octadecanoate, antimony boron octadecanoate, silver boron octadecanoate, niobium boron octadecanoate, and zirconium boron octadecanoate. In another embodiment, the compound (2) is at least one selected from the group consisting of bismuth boron 2-ethylhexanoate, zinc boron 2-ethylhexanoate, bismuth boron neodecanoate, zinc boron neodecanoate, bismuth boron hexadecanoate, zinc boron hexadecanoate, bismuth boron octadecanoate, and zinc boron octadecanoate. In yet another embodiment, the compound (2) is at least one selected from the group consisting of bismuth boron 2-ethylhexanoate, zinc boron 2-ethylhexanoate, bismuth boron neodecanoate, zinc boron neodecanoate, copper boron neodecanoate, antimony boron neodecanoate, silver boron neodecanoate, niobium boron neodecanoate, bismuth boron hexadecanoate, zinc boron hexadecanoate, bismuth boron octadecanoate, and zinc boron octadecanoate.

The compound (2) may be used alone or in combination of two or more.

The method for preparing the compound (2) is not particularly limited, and a known method may be appropriately selected and used. For example, the manufacturing method described in PTL 1 or the like may be used.

In one embodiment, the blending amount of the rubber-metal adhesion promoter is 0.01 parts by mass or more, 0.1 parts by mass or more, 0.5 parts by mass or more, 1.0 part by mass or more, 1.5 parts by mass or more, 2.0 parts by mass or more, 2.5 parts by mass or more, 3.0 parts by mass or more, 3.5 parts by mass or more, 4.0 parts by mass or more, 4.5 parts by mass or more, 5.0 parts by mass or more, 5.5 parts by mass or more, 6.0 parts by mass or more, 6.5 parts by mass or more, 7.0 parts by mass or more, 7.5 parts by mass or more, 8.0 parts by mass or more, 8.5 parts by mass or more, 9.0 parts by mass or more, 9.5 parts by mass or more, or 10 parts by mass or more per 100 parts by mass of the rubber component. In another embodiment, the blending amount of the rubber-metal adhesion promoter is 20 parts by mass or less, 15 parts by mass or less, 10 parts by mass or less, 9.5 parts by mass or less, 9.0 parts by mass or less, 8.5 parts by mass or less, 8.0 parts by mass or less, 7.5 parts by mass or less, 7.0 parts by mass or less, 6.5 parts by mass or less, 6.0 parts by mass or less, 5.5 parts by mass or less, 5.0 parts by mass or less, 4.5 parts by mass or less, 4.0 parts by mass or less, 3.5 parts by mass or less, 3.0 parts by mass or less, 2.5 parts by mass or less, 2.0 parts by mass or less, 1.5 parts by mass or less, 1.0 part by mass or less, 0.5 parts by mass or less, or 0.1 parts by mass or less per 100 parts by mass of the rubber component. In yet another embodiment, the blending amount of the rubber-metal adhesion promoter is 0.1 parts by mass to 10 parts by mass per 100 parts by mass of the rubber component.

### <Silica>

The rubber composition of the present disclosure may further comprise silica. This provides better rubber-metal adhesiveness. The silica is not particularly limited, and it may be appropriately selected from known unmodified silica or modified silica.

A preferred silica is, for example, the product name "Nipsil^{®} AQ" (Nipsil is a registered trademark in Japan, other countries, or both) manufactured by Tosoh Silica Corporation.

The silica may be used alone or in combination of two or more.

The blending amount of the silica in the rubber composition may be appropriately adjusted. In one embodiment, the blending amount of the silica in the rubber composition is 1.0 part by mass or more, 2.0 parts by mass or more, 5.0 parts by mass or more, 10 parts by mass or more, 15 parts by mass or more, 20 parts by mass or more, 30 parts by mass or more, 40 parts by mass or more, or 45 parts by mass or more per 100 parts by mass of the rubber component. In another embodiment, the blending amount of the silica in the rubber composition is 50 parts by mass or less, 45 parts by mass or less, 40 parts by mass or less, 30 parts by mass or less, 20 parts by mass or less, 15 parts by mass or less, 10 parts by mass or less, 5 parts by mass or less, or 2 parts by mass or less per 100 parts by mass of the rubber component. In yet another embodiment, the blending amount of the silica in the rubber composition is 2 parts by mass to 20 parts by mass per 100 parts by mass of the rubber component.

### <Phenolic resin>

The rubber composition of the present disclosure may further comprise a phenolic resin. This provides better rubber-metal adhesiveness. The phenolic resin is not particularly limited, and it may be appropriately selected from known phenolic resins.

Preferred phenolic resins are, for example, SUMILITERESIN^{®} PR Series (SUMILITERESIN is a registered trademark in Japan, other countries, or both) such as SUMILITERESIN^{®}PR-12686, PR-NR-1, PR-13349, PR-50731, PR-217, PR-7031A, PR-12687, and PR-13355 manufactured by Sumitomo Bakelite Co., Ltd.

The phenolic resin may be used alone or in combination of two or more.

The blending amount of the phenolic resin in the rubber composition may be appropriately adjusted. In one embodiment, the blending amount of the phenolic resin in the rubber composition is 1.0 part by mass or more, 2.0 parts by mass or more, 5.0 parts by mass or more, 10 parts by mass or more, 15 parts by mass or more, 20 parts by mass or more, or 30 parts by mass or more per 100 parts by mass of the rubber component. In another embodiment, the blending amount of the phenolic resin in the rubber composition is 30 parts by mass or less, 25 parts by mass or less, 20 parts by mass or less, 15 parts by mass or less, 10 parts by mass or less, 5 parts by mass or less, or 2 parts by mass or less per 100 parts by mass of the rubber component. In yet another embodiment, the blending amount of the phenolic resin in the rubber composition is 2 parts by mass to 20 parts by mass per 100 parts by mass of the rubber component.

### <Other components>

In addition to the above essential components, the rubber composition of the present disclosure may be appropriately blended with known additives that are blended in a rubber composition. Examples of such additives include a filler (such as carbon black), a vulcanizing agent (crosslinking agent), a vulcanization accelerator, a vulcanization retarder, an age resistor, a reinforcing agent, a softener, a vulcanizing co-agent, a colorant, a flame retardant, a lubricant, a foaming agent, a plasticizer, a processing aid, an antioxidant, an anti-scorch agent, an ultraviolet-rays protecting agent, an antistatic agent, a color protecting agent, and oil. These may be used alone or in combination of two or more, respectively.

In one embodiment, the rubber composition of the present disclosure has a cobalt compound content of 0.01 parts by mass or less. In another embodiment, the rubber composition of the present disclosure is substantially free of cobalt compounds. In yet another embodiment, the rubber composition of the present disclosure does not comprise any cobalt compound. In another embodiment, the rubber composition of the present disclosure is free of cobalt compounds, except for inevitable impurities. In yet another embodiment, the rubber composition of the present disclosure is not blended with any cobalt compound during the production of the rubber composition.

The method for preparing the rubber composition of the present disclosure is not particularly limited, and a known method may be used. For example, it may be obtained by adding a rubber component comprising at least 10 parts by mass of NBR and a rubber-metal adhesion promoter, and optionally arbitrary components such as silica, at the same time or in an arbitrary order and kneading the components using a kneader such as a Banbury mixer, a roll, or an internal mixer.

The use of the rubber composition of the present disclosure is not particularly limited. For example, it can be used for any rubber article such as a hose, a conveyor belt, a crawler, a tire, an electric wire, a vibration-proof material, and a sole.

### (Composite)

The composite of the present disclosure is a composite of any of the above rubber compositions and a metal member. This provides rubber-metal adhesiveness equal to or higher than that of a rubber composition comprising a cobalt salt.

In the composite of the present disclosure, any of the above rubber compositions may be in contact with a metal member. For example, a part or all of the metal member may be covered with the rubber composition, or a rubber layer made of the rubber composition may be laminated on at least one surface side of a layer made of the metal member.

The metal member is not particularly limited, and it may be, for example, a known metal wire such as a steel wire or a steel sheet.

The metal member may or may not be plated. The type of plating is not particularly limited, and known plating such as brass plating, zinc plating, chrome plating and nickel plating may be appropriately adopted. In one embodiment, the metal member is plated with at least one selected from the group consisting of brass plating and zinc plating.

The metal member may be used alone or in combination of two or more.

The method for producing the composite is not particularly limited, and a known method may be appropriately adopted. For example, a composite in which a metal member is coated with a rubber composition can be obtained by vulcanizing the rubber composition with the rubber composition covering the metal member. Further, a composite in which a rubber layer made of a rubber composition is laminated on at least one surface side of a layer made of a metal member, for example, can be obtained with the method for producing a laminated body described in WO2017/056414, for example.

The use of the composite of the present disclosure is not particularly limited, and it can be used, for example, for any rubber article such as a hose, a conveyor belt, a crawler, an electric wire, a vibration-proof material, and a tire.

### (Hose)

The hose of the present disclosure is a hose using any of the above rubber compositions or composites. This provides rubber-metal adhesiveness equal to or higher than that of a rubber composition comprising a cobalt salt.

The structure of the hose is not particularly limited, and a known structure may be appropriately adopted. For example, it may be a hose comprising one layer using only any of the above rubber compositions, or it may be a three-layer hose consisting of an inner rubber layer, a reinforcing layer (such as a metal wire layer) and an outer rubber layer as described in WO2017/056414. In the case of the three-layer hose, any of the above rubber compositions may be used for at least one of the inner rubber layer and the outer rubber layer or may be used for both. Further, when any of the above rubber compositions is used for both of the inner rubber layer and the outer rubber layer, the rubber composition for each layer may be the same or different.

### (Conveyor belt)

The conveyor belt of the present disclosure is a conveyor belt using any of the above rubber compositions or composites. This provides rubber-metal adhesiveness equal to or higher than that of a rubber composition comprising a cobalt salt.

The conveyor belt is not particularly limited except that any of the above rubber compositions or composites is used, and known conveyor belt structures and production methods may be adopted.

### (Crawler)

The crawler of the present disclosure is a crawler using any of the above rubber compositions or composites. This provides rubber-metal adhesiveness equal to or higher than that of a rubber composition comprising a cobalt salt.

The crawler is not particularly limited except that any of the above rubber compositions or composites is used, and known crawler structures and production methods may be adopted.

### (Tire)

The tire of the present disclosure is a tire using any of the above rubber compositions or composites. This provides rubber-metal adhesiveness equal to or higher than that of a rubber composition comprising a cobalt salt.

The tire is not particularly limited except that any of the above rubber compositions or composites is used, and known tire structures and production methods may be adopted. Examples of a member of the tire include a tread portion, a shoulder portion, a sidewall portion, a bead portion, a belt layer, and a carcass.

### EXAMPLES

The present disclosure will be described in more detail based on Examples, which are illustrative purposes only and shall not be construed as limiting the scope of the present disclosure. In the examples, the blending amount is in parts by mass unless otherwise specified.

The details of the materials used in the examples are as follows.
NBR1: product name "N230S" manufactured by JSR Corporation, AN = 35 %
NBR2: product name "N250S" manufactured by JSR Corporation, AN = 19.5 %
NR: No. RSS3
SBR: product name "JSR 1500" manufactured by JSR Corporation
BR: product name "BR01" manufactured by JSR Corporation
Bismuth neodecanoate: equivalent to the metal salt of an aliphatic carboxylic acid (1)
Zinc neodecanoate: equivalent to the metal salt of an aliphatic carboxylic acid (1)
Cobalt stearate: product name "Cobalt stearate" manufactured by DIC Corporation
Carbon black: product name "Asahi #50" manufactured by Asahi Carbon Co., Ltd.
Silica: product name "Nipsil^{®} AQ" manufactured by Tosoh Silica Corporation Phenolic resin: product name "SUMILITERESIN^{®} PR-12687" manufactured by Sumitomo Bakelite Co., Ltd.
Sulfur: product name "SULFAX^{®} 5" (SULFAX is a registered trademark in Japan, other countries, or both) manufactured by Tsurumi Chemical Industry Co., Ltd.
Vulcanization accelerator: product name "NOCCELER NS" manufactured by Ouchi Shinko Chemical Industrial Co., Ltd., N-tert-butyl-2-benzothiazolylsulfenamide
Zinc oxide: product name "Ginrei^{®} SR" (Ginrei is a registered trademark in Japan, other countries, or both) manufactured by Toho Zinc Co., Ltd.
Metal wire: brass-plated (Cu: mass 63 %, Zn: 37 mass%, plating weight: 4 g/kg) steel wire with a diameter of 0.30 mm and a length of 100 mm

### (Example 1)

The composition listed in Table 1 and Table 2 (excluding sulfur and vulcanization accelerator) was kneaded using an internal mixer until the temperature of the kneaded product reached 170 °C, and then the mixture was cooled to 40 °C or lower. Next, the sulfur and vulcanization accelerator were added to the mixture to obtain an unvulcanized rubber composition.

### - Preparation of rubber-metal adhesiveness test sample

Two of the obtained unvulcanized rubber compositions were rolled and molded into sheets having a length of 150 mm, a width of 150 mm and a thickness of 2 mm, respectively, seven metal wires were lined up on each sheet without gap, and vulcanization was performed at 167 °C for 15 minutes to obtain test samples of a rubber-metal composite comprising vulcanized rubber.

### - Rubber-metal adhesiveness test

For the test sample of the rubber-metal composite comprising vulcanized rubber, five of the metal wires, excluding the two at both ends, were pulled together with a pair of pliers with a constant force. The same test was performed on the other test sample. Next, the coverage (%) of the vulcanized rubber on the surface of the metal wire after being pulled was measured. The results are listed in Table 2. The larger the coverage value is, the better the rubber-metal adhesiveness is. When the result is 80 % or more in both tests, the adhesiveness is acceptable. In Table 2, the left side of the symbol "/" indicates the result of the first test, and the right side of the symbol "/" indicates the result of the second test.

### - Durability evaluation

After vulcanizing the obtained unvulcanized rubber composition at 167 °C for 15 minutes, the tensile strength (Tb) at cutting and the elongation (Eb) at cutting of the vulcanized rubber were measured according to JIS K 6251. The results are listed in Table 2. The larger the values of Tb and Eb are, the better the durability of the rubber composition is.

### (Examples 2 to 12 and Comparative Examples 1 to 4)

An unvulcanized rubber composition was prepared in the same manner as in Example 1 except that the composition of the rubber composition was changed to the composition listed in Table 1, Table 2 and Table 3, and the test of rubber-metal adhesiveness comprising the vulcanized rubber and the durability evaluation were performed. The results are listed in Table 2 and Table 3.

| | Amount |
|---|---|
| Rubber component | Type and amount listed in Table 2 or Table 3 |
| Rubber-metal adhesion promoter | |
| Carbon black | 60 |
| Silica | Amount listed in Table 3 |
| Phenolic resin | |
| Zinc oxide | 5 |
| Sulfur | 6 |
| Vulcanization accelerator | 0.6 |

| | | | Comparative Example 1 | Comparative Example 2 | Example 1 | Example 2 | Example 3 | Example 4 |
|---|---|---|---|---|---|---|---|---|
| Composition | Rubber component | NR | 20 | 20 | 90 | - | 20 | 20 |
| | | NBR1 (Medium and high nitrile) | 60 | 60 | 7.5 | 75 | 60 | 60 |
| | | NBR2 (Low nitrile) | 20 | 20 | 2.5 | 25 | 20 | 20 |
| | Amount of AN in rubber component (%) | | 25 | 25 | 3 | 31 | 25 | 25 |
| | Rubber-metal adhesion promoter | Bismuth neodecanoate | - | - | 2.54 | 2.54 | 2.54 | - |
| | | Zinc neodecanoate | - | - | - | - | - | 1.29 |
| | | Cobalt stearate | 2 | - | - | - | - | - |
| Performance | Rubber-metal adhesiveness (1st (%)/2nd (%)) | | 10/5 | 20/0 | 100/100 | 100/100 | 100/100 | 85/80 |
| | Durability | Tb (MPa) | 13.7 | 13.5 | 11.8 | 13.4 | 14.5 | 14.5 |
| | | Eb (%) | 235 | 200 | 270 | 205 | 250 | 275 |

| | | | Comparative Example 3 | Comparative Example 4 | Example 5 | Example 6 | Example 7 | Example 8 | Example 9 | Example 10 | Example 11 | Example 12 |
|---|---|---|---|---|---|---|---|---|---|---|---|---|
| Composition | Rubber component | NR | 20 | 20 | 90 | - | - | - | 20 | 20 | 20 | 20 |
| | | SBR | - | - | - | 90 | - | - | - | - | - | - |
| | | BR | - | - | - | - | 90 | - | - | - | - | - |
| | | NBR1 (Medium and high nitrile) | 60 | 60 | 7.5 | 7.5 | 7.5 | 75 | 60 | 60 | 60 | 60 |
| | | NBR2 (Low nitrile) | 20 | 20 | 2.5 | 2.5 | 2.5 | 25 | 20 | 20 | 20 | 20 |
| | Amount of AN in rubber component (%) | | 25 | 25 | 3 | 3 | 3 | 31 | 25 | 25 | 25 | 25 |
| | Rubber-metal adhesion promoter | Bismuth neodecanoate | - | - | 2.54 | 2.54 | 2.54 | 2.54 | 2.54 | - | 2.54 | 2.54 |
| | | Zinc neodecanoate | - | - | - | - | - | - | - | 1.29 | - | - |
| | | Cobalt stearate | 2 | - | - | - | - | - | - | - | - | - |
| | Silica | | 15 | 15 | 15 | 15 | 15 | 15 | 15 | 15 | 15 | - |
| | Phenolic resin | | 5 | 5 | 5 | 5 | 5 | 5 | 5 | 5 | - | 5 |
| Performance | Rubber-metal adhesiveness (1st (%)/2nd (%)) | | 100/100 | 100/75 | 100/100 | 100/100 | 100/100 | 100/100 | 100/100 | 100/100 | 100/100 | 100/100 |
| | Durability | Tb (MPa) | 11.4 | 14.0 | 12.6 | 10.9 | 9.6 | 15.4 | 15.0 | 14.6 | 10.8 | 13.8 |
| | | Eb (%) | 220 | 210 | 300 | 430 | 360 | 280 | 250 | 295 | 220 | 210 |

As indicated in Table 2 and Table 3, it was possible to provide a H rubber composition and a composite having rubber-metal adhesiveness equal to or higher than that of a rubber composition comprising a cobalt salt according to the present disclosure.

### INDUSTRIAL APPLICABILITY

According to the present disclosure, it is possible to provide a rubber composition comprising at least acrylonitrile butadiene rubber (NBR) as a rubber component and having rubber-metal adhesiveness equal to or higher than that of a rubber composition comprising a cobalt salt. Further, according to the present disclosure, it is possible to provide a composite, a hose, a conveyor belt, a crawler, and a tire having rubber-metal adhesiveness equal to or higher than that of a rubber composition comprising a cobalt salt.

## Claims

1. A rubber composition, comprising:
a rubber component, and
a rubber-metal adhesion promoter, wherein
the rubber component comprises at least 10 parts by mass of acrylonitrile butadiene rubber per 100 parts by mass of the rubber component,
the rubber-metal adhesion promoter comprises at least one selected from the group consisting of a metal salt of an aliphatic carboxylic acid (1) and a compound (2) represented by a general formula (A): [(RCOO)ₓMO]₃Z,
the aliphatic carboxylic acid of the metal salt of an aliphatic carboxylic acid (1) has 2 to 25 carbon atoms,
the metal of the metal salt of an aliphatic carboxylic acid (1) is bismuth, zinc, copper, antimony, silver, niobium or zirconium, and
in the general formula (A), (RCOO) is a residue of an aliphatic carboxylic acid having 2 to 25 carbon atoms, M is bismuth, zinc, copper, antimony, silver, niobium or zirconium, x is an integer of 1 or more and (valence of M - 1), and Z is a structure selected from the following formulae (z-1) to (z-4).

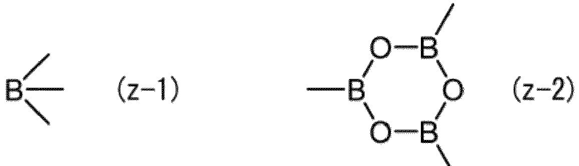

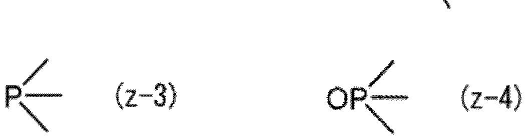

2. The rubber composition according to claim 1, wherein the rubber component comprises 90 parts by mass or less of acrylonitrile butadiene rubber per 100 parts by mass of the rubber component.

3. The rubber composition according to claim 1 or 2, wherein a content of bound acrylonitrile is 10 % to 45 % with respect to a total amount of the rubber component.

4. The rubber composition according to any one of claims 1 to 3, wherein the rubber component is a combination of acrylonitrile butadiene rubber and at least one selected from the group consisting of natural rubber, styrene butadiene rubber and butadiene rubber.

5. The rubber composition according to any one of claims 1 to 4, wherein the rubber-metal adhesion promoter comprises the metal salt of an aliphatic carboxylic acid (1), and the metal of the metal salt of an aliphatic carboxylic acid (1) is bismuth or zinc.

6. The rubber composition according to any one of claims 1 to 5, wherein the rubber-metal adhesion promoter comprises the metal salt of an aliphatic carboxylic acid (1), and the aliphatic carboxylic acid of the aliphatic carboxylic acid is an aliphatic monocarboxylic acid or an aliphatic dicarboxylic acid.

7. The rubber composition according to claim 6, wherein the aliphatic carboxylic acid of the aliphatic carboxylic acid is a saturated aliphatic monocarboxylic acid having 2 to 20 carbon atoms.

8. The rubber composition according to claim 7, wherein the saturated aliphatic monocarboxylic acid is 2-ethylhexanoic acid, neodecanoic acid, hexadecanoic acid or octadecanoic acid.

9. The rubber composition according to any one of claims 1 to 8, wherein the rubber-metal adhesion promoter comprises the compound (2), and M in the general formula (A) is bismuth or zinc.

10. The rubber composition according to any one of claims 1 to 9, wherein the rubber-metal adhesion promoter comprises the compound (2), and Z in the general formula (A) is a structure represented by the formula (z-1).

11. The rubber composition according to any one of claims 1 to 10, wherein the rubber-metal adhesion promoter comprises the compound (2), and (RCOO) in the general formula (A) is a residue of a saturated aliphatic monocarboxylic acid having 2 to 20 carbon atoms.

12. The rubber composition according to claim 11, wherein the saturated aliphatic monocarboxylic acid is 2-ethylhexanoic acid, neodecanoic acid, hexadecanoic acid or octadecanoic acid.

13. A composite of the rubber composition according to any one of claims 1 to 12 and a metal member.

14. A hose using the composite according to claim 13.

15. A conveyor belt using the composite according to claim 13.

16. A crawler using the composite according to claim 13.

17. A tire using the composite according to claim 13.
